# EUROPEAN PATENT APPLICATION

(11) **EP 1 980 500 A1**
(43) Date of publication of application: **15.10.2008**
(21) Application number: 08102793.0
(22) Date of filing: 20.03.2008
(51) Int. Cl.: B65D 75/58, A23K 1/16, A23K 1/18

(54) **Packaging containing food supplement for horses**

(30) Priority: 20.03.2007 NL 2000549
(71) Applicant: Blom, Mathias Maria, 3871 MB Hoevelaken (NL)
(72) Inventor: Blom, Mathias Maria, 3871 MB Hoevelaken (NL)
(74) Representative: Verhees, Godefridus Josephus Maria

(57) **Abstract**

A consumption package 1 containing a food supplement 2 for horses is formed by a bag-shaped high-barrier or airtight foil 3, which is provided with a closable pour-out opening 4. A closable mouthpiece 6 is preferably fitted on the pour-out opening.

The food supplement 2 present in the consumption package 1 contains polyunsaturated fatty acids, including preferably omega-3 fatty acids. Moreover, the food supplement 2 preferably contains glucosamine.

## Description

### BACKGROUND OF THE INVENTION:

### Field of the invention

The invention relates to a consumption package containing a food supplement for horses, which food supplement contains rapidly oxidisable substances. A consumption package is here defined as a package out of which the food supplement is taken directly for use. This is contrary to a storage package, which is often multiple and in which discrete consumption packages are usually packed. Rapidly oxidisable substances are defined as substances that oxidise to such an extent within a relatively short time that they hereby lose a large part of their properties. Polyunsaturated fatty acids are an example of rapidly oxidisable substances in a food supplement. These fatty acids are currently much in demand as fats that have a favourable influence on the heart and blood vessels and on the immune system.

### Prior art

Food additives that contain polyunsaturated fatty acids are well-known; see for example DE 199 58 620 A. These are oils that are administered to animals or added to animal feed in a liquid form. The disadvantage of this is that polyunsaturated fatty acids oxidise relatively rapidly if they are exposed to air. For this reason these feed additives must be given to the animals quickly after opening the package or these feed additives are present in closable tubes. However, horses need large amounts of these feed additives so that package in tubes is not commercially interesting due to the cost.

Moreover, feed additives are known, such as vitamins, which are administered to horses or added to horse feed in powder form. The disadvantage of these powder form substances is that the horses often sneeze when consuming them.

Therefore both types of useful substances (liquids and powders), of which it is wished that the horses should consume them daily, each have their disadvantages.

### Summary of the invention

An objective of the invention is to provide a consumption package containing a food supplement for horses of the sort described in the preamble, in which the food supplement cannot oxidise rapidly and gives no problems during its consumption by a horse and with which the food supplement can be easily dosed. For this purpose the consumption package containing a food supplement according to the invention is characterised in that the consumption package is a single package comprising a bag-shaped high-barrier foil, which has been placed directly around the food supplement and which is provided with a pour-out opening on which a closable mouthpiece is fitted, in which the food supplement is an emulsion or paste because a powder has been added to the oxidisable substances. A useful powder is here defined as a substance whose purpose is not only to bind a liquid into an emulsion or a paste, but also has a positive effect on the horse's condition, for example vitamins. The high-barrier foil is a foil with anti-oxidant properties (for example a foil that is impermeable to oxygen), which is wrapped tightly around the contents and adapts to the decreasing volume of the contents. A consumption package in the form of a foil has the advantage that the cost is interesting if relatively large volumes have to be packed, contrary to tubes, the cost of which is only interesting for small volumes. The closable pour-out opening and the adaptation of the foil to the decreasing volume of the food supplement in the consumption package mean that no air gets into the consumption package during and after use so that no oxidation of the food supplement can occur. The food supplement can be efficiently dosed because it is an emulsion or paste and it does not lead to problems during its consumption, which is the case if the liquid (fatty acids) and powder (for example vitamins) constituents were consumed separately by a horse.

Note that a high-barrier foil for packages is in itself well-known; see for example NL 7602137 A. However, this well-known foil is not used to pack a substance directly, but is used in the form of a bag around a tube in which the substance is present with multiple packs of this substance.

The amount of feed supplement is preferably at least 1 kg and preferably at least sufficient for one horse for three days.

The polyunsaturated fatty acids preferably contain omega-3 fatty acids and the powder preferably contains glucosamine. Both the problem of rapid oxidation of polyunsaturated fatty acids and of sneezing with powdery food supplements are solved by using a useful powdery substance such as glucosamine instead of just any emulsified raw material such as meal.

An embodiment of the consumption package containing a food supplement according to the invention is characterised in that the food supplement is packed under an inert gas.

### Brief description of the drawings

The invention will be elucidated more fully below on the basis of drawings in which an embodiment of the consumption package containing a food supplement according to the invention is shown. In these drawings:
Figure 1 shows an embodiment of the consumption package containing a food supplement for horses unopened; and
Figure 2 shows an embodiment of the consumption package containing a food supplement for horses opened during use.

### Detailed description of the drawings

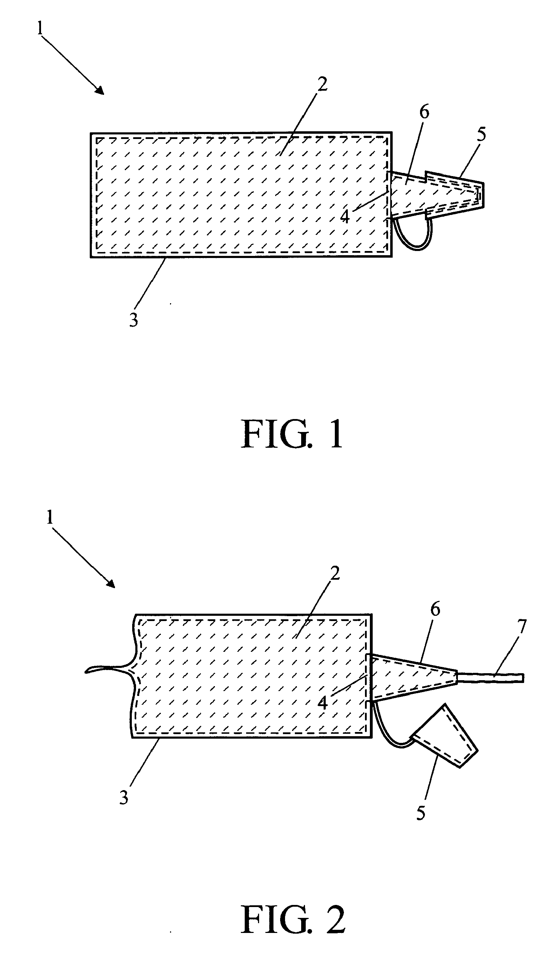

Figures 1 and 2 show an embodiment of the consumption package 1 containing a food supplement 2 for horses unopened and opened during use. The consumption package 1 is formed by a bag-like high-barrier or airtight foil 3, which is provided with a pour-out opening 4 on which a mouthpiece 6, which can be closed by a cap 5, is fitted.

The food supplement 2 inside the consumption package 1 contains polyunsaturated fatty acids, including preferably omega-3 fatty acids, to which a useful, inert powder, such as glucosamine, has been added. This makes the food supplement 2 an emulsion or paste and thereby easy to dose. In addition to or instead of glucosamine other useful, inert powders can be added to the polyunsaturated fatty acids, for example maize meal, lactose, vitamins or ground linseed meal.

A standard dosage 7 can be reproduced because of the closable mouthpiece 6. This is shown in figure 2. This makes dosage of the food supplement 2 per animal simple, for example one centimetre of paste per 10 kg body weight. The amount of food supplement is preferably between 1.5 and 2.5 kg.

Although in the above the invention is explained on the basis of drawings, it should be noted that the invention is in no way limited to the embodiment shown in the drawings. The invention also extends to all embodiments deviating from the embodiment shown in the drawings within the context defined by the claims.

## Claims

1. Consumption package containing a food supplement for horses, which food supplement contains rapidly oxidisable substances, **characterised in that** the consumption package is a single package comprising a bag-shaped high-barrier foil, which is placed directly around the food supplement and which is provided with a pour-out opening on which a closable mouthpiece is fitted, in which the food supplement is an emulsion or paste because a powder has been added to the oxidisable substances.

2. Consumption package containing a food supplement according to claim 1, **characterised in that** the amount of food supplement is at least 1 kg.

3. Consumption package containing a food supplement according to claim 1 or 2, **characterised in that** the rapidly oxidisable substances contain polyunsaturated fatty acids, such as omega-3 fatty acids, and the powder contains glucosamine.

4. Consumption package containing a food supplement according to claim 1, 2 or 3, **characterised in that** the food supplement is packed under an inert gas.
